# EUROPEAN PATENT APPLICATION

(11) **EP 2 363 611 A2**
(43) Date of publication of application: **07.09.2011**
(21) Application number: 11155197.4
(22) Date of filing: 21.02.2011
(51) Int. Cl.: F16B 5/06, F16B 21/07, B60R 13/02, F16B 35/06

(54) **Fixings on fasteners**

(30) Priority: 24.02.2010 GB 1003063
(71) Applicant: Nissan Motor Manufacturing (UK) Ltd., Cranfield Bedfordshire MK43 0DB (GB)
(72) Inventor: Sharpe, Andrew, Cranfield, Bedfordshire MK43 0DB (GB)

(57) **Abstract**

Fixing 1 is arranged to secure a part (not shown), e.g. a vehicle trim element, onto the head (2, Fig. 2) of a fastener. Fixing 1 comprises a body 3 with independent means for resisting shear forces and axial forces applied to fixing 1 relative to said fastener. The shear resistant means may be a protrusion 4 extending from body 3 and a recess 12 in head 2, or vice versa. The axial force resistant means may comprise at least one leg 5, 19 extending from body 3. Each leg 5 may have an inwardly protruding foot 8 arranged to snap fit around a flange (13, Fig. 2) on the fastener. Alternatively, a snap ring 20 may engage in a groove 21 in skirt 22 and a corresponding groove in fastener head 2. A threaded aperture in body 3 may allow removal of fixing 1.

## Description

The present invention relates generally to fixings. More specifically, the present invention relates to fixings for use as load bearing devices and/or as covers for a fastener. In particular the invention relates to a single piece fixing that can be applied to a fastener for load bearing purposes after the fastener has been fitted to a body.

There are many types of fasteners available and in use today. One such type of fastener is a threaded fastener such as a nut or bolt. Nuts and bolts are used widely as a means of fastening one item to another in a vast range of environments and applications. For example, threaded fasteners are commonly used to fasten items to one another in the construction of buildings, furnishings and motor vehicles to name but a few. It will be appreciated that threaded fasteners are available in many configurations, suitable for a wide range of roles and applications. Whilst nuts are typically provided with a series of opposing surfaces arranged for cooperation with a tool, bolts may be provided with an enlarged head, arranged to be driven by a variety of tools depending on the intended role of the fastener. Non-threaded fasteners are also known; for example, rivets may be provided having a head piece and a shaft.

As has already been noted, bolts and similar fasteners are utilised in many different applications and environments. Some of these environments require that strict criteria in respect of tightening torque and other safety related performance criteria are satisfied. For example, some fasteners are required to perform to specific performance criteria such that they may be used in safety critical applications/environments. An example of such a situation may be found in the motor industry. Bolts may be utilised in the construction of motor vehicles for many purposes, but one such purpose is the fastening of vital equipment such as suspension and brake related components to the body of the motor vehicle. It will be appreciated that fastenings employed in such a role are safety critical. It is known to use bolts to secure such components to the body of a motor vehicle. However, due to the requirement that the fastening be safety critical, once bolts have been utilised to fasten, for example, the handbrake lever to the motor vehicle body, it is undesirable to utilise the bolt for any secondary purpose, such as the attachment of trim, that may interfere with the bearing surfaces of the bolt.

In the scenario discussed above it can also be undesirable to utilise additional fasteners to secure additional components to a body of a motor vehicle. It may be undesirable to introduce further bolts, for example, to the body of a motor vehicle because the use of bolts requires the presence of apertures in the motor vehicle body. The presence of apertures through or into which bolts are fastened increases the risk of corrosion of the bolt and/or the motor vehicle body around the aperture. There is therefore a need to minimise the number of fasteners such as bolts that are utilised in the construction of motor vehicles and other apparati that experience similar circumstances, whilst ensuring that the efficacy of safety critical fasteners is not compromised.

Panel fixings are another known means of securing a part to a vehicle body, but are typically only used for lightweight parts which require a relatively low securing force. Panel fixings are commonly used for attaching trim or cover panels to structures such as car bodies. Panel fixings may be configured for single or multiple use, i.e. they may be removed and refitted for service. Panel fixings may be formed as a unitary part, or may consist of multiple parts. Unitary panel fixings are typically unsuitable for resisting shear loads as they are only intended to manage axial forces along the assembly or fitment axis of the fixing.

Some panel fixings secure the part to the vehicle body by means of an expanding portion arranged to grip the inner surfaces of an aperture formed in the vehicle body. These expandable fixings are typically formed from multiple parts and secure one item to another only after an inner wedge is forced by the user into the expanding portion. However, such fixings can be complicated in nature and are only intended for use securing trim pieces and the like to vehicle bodies, they are not suitable for use with safety critical fasteners. A more simple and user friendly fixing is therefore desirable.

It is an aim of the present invention to address this problem whilst keeping parts complexity and assembly time to a minimum.

It is against this background that the present invention has been conceived. It is an aim of the present invention to provide a fixing for application to a fastener that is resistant to both axial and shear forces relative thereto without affecting the bearing surfaces of the fastener, whilst minimising assembly time and parts complexity.

Aspects and embodiments of the invention may provide a fixing means for securing a part to a fastener fixed to a body, without affecting the bearing surfaces between the fastener and said body. Other embodiments of the invention may provide a vehicle and a method of securing a part to a body. The present invention greatly reduces the assembly time associated with securing a part such as a trim element to a body whilst reducing parts complexity, mass and cost.

Other aims and advantages of the invention will become apparent from the following description, claims and drawings.

### Summary of the invention.

Aspects of the invention therefore provide an apparatus, a trim element or part, a vehicle and a method as claimed in the appended claims.

In an aspect of the present invention there is provided a fixing for application to a fastener, the fixing comprising: a body; a first member providing means for resisting shear forces applied to the fixing; and a second member providing means for resisting axial forces applied to separate the fixing from a fastener.

Advantageously, the fixing of the present invention provides a means for securing a part, such as a trim element, to a body via a fastener intended for another purpose, without affecting the bearing surfaces between the fastener and said body. In addition, the fixing of the present invention advantageously uses independent means for resisting shear forces applied to the fixing and for resisting axial forces. This independent management of forces acting in different axes greatly enhances the reliability and robustness of the fixing.

In an example, the means for resisting shear forces is a protrusion extending from the body, wherein the protrusion is shaped to cooperate with a recess provided in a fastener when the fixing is brought into engagement with the fastener.

In an example, the means for resisting shear forces is a recess or aperture in the body, wherein the recess or aperture is shaped to cooperate with a protrusion on a fastener when the fixing is brought into engagement with the fastener.

The cooperation of the protrusion and recess resists any shear forces that may be applied to the fixing after its application to a fastener, thus helping to prevent the fixing becoming dislodged from the fastener by shear forces. This may be improved further by matching the shape of the protrusion closely to that of the recess such that little or no movement is possible between the two when a shear force is applied.

In an example, the means for resisting axial forces comprises at least one leg extending from the body. Preferably, the or each leg extends from an edge region of the body. Preferably, the fixing comprises a plurality of legs wherein the legs are spaced substantially evenly around the body. More preferably, the legs are resilient, such that they can flex or deflect to facilitate engagement with a fastener and any retaining features provided on the fastener, but will then return toward their original shape and/or configuration to resist removal of the fixing from the fastener.

In an example, a retaining feature is provided on the or each leg comprising an inwardly protruding foot at the end of each leg that is distal to the body, wherein the retaining feature is configured to cooperate with a retaining feature provided on a fastener when the fixing is brought into engagement with the fastener. The feet thus engage a retaining feature on the fastener, and act to resist disengagement. Even distribution of the legs ensures that forces resisting an attempted reversal of the engagement are distributed generally evenly through the fixing.

In an example, each foot protrudes substantially perpendicularly to the leg, and defines inward and opposing outward facing surfaces adjacent to the leg. Preferably, the outward facing surface of the foot is tapered from a point proximal to the leg to a distal end of the foot. Providing such a taper can assist in facilitating engagement of the feet with a retaining feature on a fastener. For example, the provision of a taper can assist in the feet being caused to slide over a protruding retaining feature on a fastener.

In an example, the fastener is a fastener having a head and a shaft. In such an embodiment the recess or protrusion is provided on a first surface of the head, the first surface opposing the shaft, and the at least one retaining feature is provided on a surface or surfaces adjacent the first surface.

In an example, the at least one retaining feature provided on the fastener is a flange over which the feet of the fixing are caused to slide and snap-fit during engagement of the fixing and fastener; and with which the feet engage to prevent removal of the fixing. Preferably, the flange presents an upper flange surface which is tapered from a point proximal the head of the fastener to the distal edge of the flange. The tapering may be equal and opposite to the tapering provided on the outward facing surface of each foot, or may be opposite but of a different gradient. Advantageously, the tapering forms a ramp-like feature to deflect the legs around the flange to aid engagement and to produce an audible indication to the user that the fixing has been correctly secured to the fastener.

In an example, the at least one retaining feature provided in the fastener is a recess with which the feet cooperate during engagement of the fixing and fastener to resist removal of the fixing. The fastener may be, for example, a bolt, rivet, nut or similar device having a flange or recess arranged annularly around its head.

In an example, the means for resisting axial forces comprises a skirt extending from the body. Preferably, a retaining feature is provided by a resilient split ring at least partly surrounded by an inward facing annular recess formed in an internal face of the skirt. Preferably, the annular recess is disposed adjacent an end of the skirt distal to the body.

The fixing of this example may be provided in combination with a fastener having a head, wherein the head of the fastener includes an annular recess configured to be located adjacent the recess in the skirt when the fixing and fastener are brought into engagement.

Advantageously, the fixing of the present invention can be provided as a single piece which will fix to a fastener and which may be used as a load bearing device for another part. For example, the fixing of the invention can be applied to the head of a threaded fastener after the fastener has been fitted and without the need for adhesive. The fixing can be used to attach another element, such as a piece of trim in a motor vehicle, to the fastener head and does so without interfering with the bearing surface of the fastener. Accordingly, the present invention enables the fixing of items to fasteners such as safety critical fasteners; and can thus reduce the need for additional fasteners to be used.

In another aspect of the present invention for which protection is sought, there is provided a trim element comprising a fixing according to any preceding paragraph. Examples of suitable trim elements include trim panels, heat shields, splash guards, ducting panels and aerodynamic control surfaces for a vehicle.

In a further aspect of the present invention for which protection is sought, there is provided a vehicle comprising a fixing according to any preceding paragraph.

In yet a further aspect of the present invention for which protection is sought, there is provided a method for securing a part to a vehicle body, the method comprising the steps: securing a fastener to a vehicle body; positioning the part adjacent to the fastener; locating a fixing according to a first aspect of the invention in or through the part onto an exposed head of the fastener; aligning a cooperating feature of the fixing with a corresponding feature on the head of the fastener; and forcing the fixing and associated part against the head of the fastener so as to bring a retaining feature of the fixing into engagement with a corresponding retaining feature provided on the head of the fastener.

The present invention will now be described in detail with reference to the accompanying drawings, in which:
Fig. 1(a) is a bottom plan view of a fixing according to a first exemplary embodiment of the invention;
Fig. 1(b) is a bottom plan view of a fixing according to a second exemplary embodiment of the invention;
Fig. 1(c) is a bottom plan view of a fixing according to a third exemplary embodiment of the invention;
Fig. 2 is a top plan view of a fixing according to the first embodiment of the invention applied to a fastener;
Fig. 3 is a sectional view of the fixing and fastener according to the first embodiment of the invention along line A-A in Fig. 2 shown pre-fitment; and
Fig. 4 is a sectional view of the fixing and fastener according to the first embodiment of the invention taken along line A-A in Fig. 2 shown post-fitment.

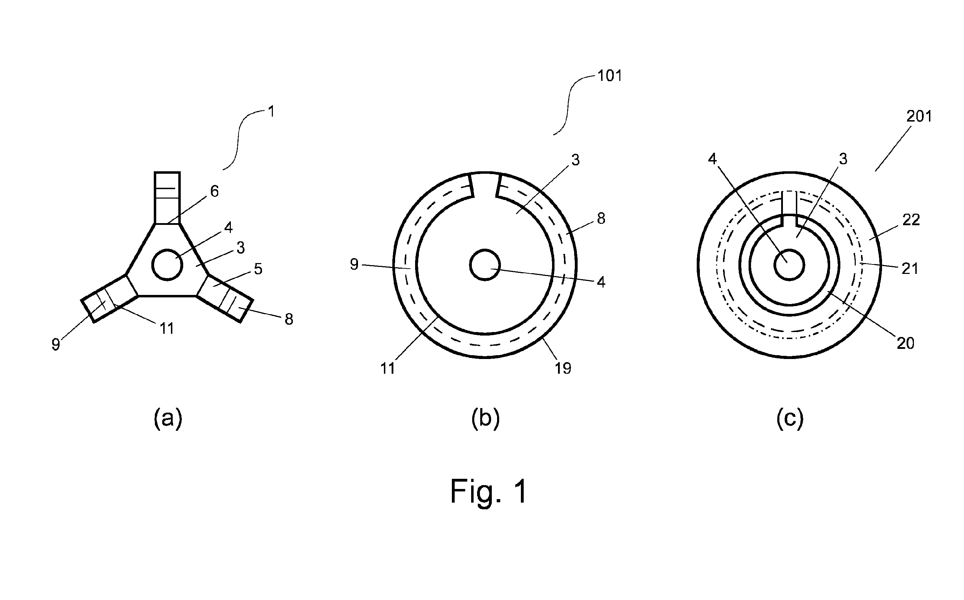

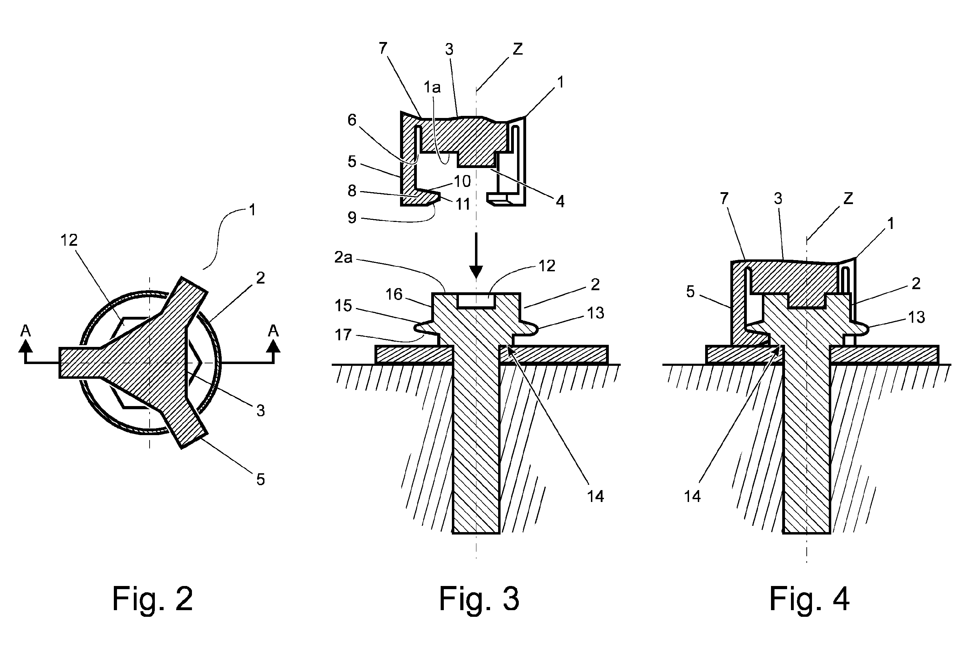

In accordance with the invention there is provided a fixing 1 that takes the form of a clip or cap and which is depicted in figures 1 to 4. The clip or cap is suitable for use with a particular type of fastener. That is, it may be used with any type of fastener that may be considered to include a head 2. A specific example is a head of a threaded bolt. However, other equally suitable fasteners apply such as rivets, nuts etc. Figures 3 and 4 demonstrate that the fixing 1 of a first embodiment of the invention may be applied to the head 2 of a bolt or analogous fastener. The same is true of the second and third embodiments, although not shown applied to bolts.

Figures 1 to 4 show three possible embodiments of the fixing of the present invention. Figures 1 (a), and 2 to 4, show an embodiment of the fixing of the invention comprising a body portion 3, a first member or protrusion 4, arranged to resist shear forces between the fixing and the fastener and a second member in the form of a leg 5, arranged to resist axial forces applied to separate the fixing from the fastener. In this way, the means for resisting shear forces applied to the fixing are independent from the means to resist axial forces. This independent management of forces acting in different axes greatly enhances the reliability and robustness of the fixing.

In the example shown in Figures 1a and 2 to 4, the fixing is provided with three legs 5, which can serve to centralise the fixing on a fastener. Figure 1(b) shows an alternative embodiment having a single, broader leg 19, although more than one such leg could be used. Figure 1(c) shows a further alternative embodiment comprising a body portion 3, a skirt 22 extending from the body and having a recess 21 toward an end distal to the body, and a resilient split ring 20 which may be located or retained within the recess 21.

Referring initially to figures 1 (a) and 2, the clip of the first embodiment of the invention comprises a body portion 3, a protrusion 4 and at least three legs 5. The legs 5 are generally of a narrow configuration although this is not necessary. The fixing 1 may however, be provided with three substantially equally spaced legs 5 which provide a self-centring effect relative to the fastener in use. It is of course possible to use more than three legs 5, but this may be undesirable due to the increase in complexity of the tool.

As shown in the figures, the legs 5 extend from the body 3 at an edge region of the body 3, and are preferably spaced substantially evenly around the body 3. This assists in centralising the fixing on the fastener. The protrusion 4 extends from the body 3 of the fixing 1, preferably from a central location. The legs 5 extend from the body 3 in generally the same direction as the protrusion 4 as may be seen in either of Figs. 3 and 4.

Each leg 5 protrudes from the body 3 such that it is substantially perpendicular thereto. Each leg 5 is also manufactured to be resilient such that the ends of the legs 5 that are distal to the body 3 can flex away from the axis Z of the body 3 to enable attachment to a fastener as will be described below. The resilience of the legs 5 may be provided in any suitable way; for example through selection of a suitably resilient material from which to manufacture the legs 5 and/or through selection of appropriate dimensions of the legs, such as the cross sectional dimensions. Alternatively, and in a preferred embodiment, resilience can be provided or enhanced through the provision of a notch 6 located at the point of connection between the body 3 and each leg 5. Such notches 6 may be seen in Figs. 3 and 4. The provision of a notch 6 forms a small region 7 of contact between the leg 5 and the body 3 which is more readily deformable than a larger such region. This region 7 serves in the manner of a hinge allowing each leg 5 to deflect away from the body 3 to facilitate application of the fixing 1 to a fastener such as a bolt, but to return to its original configuration once fully seated against said fastener.

Each of the legs 5 includes a retaining feature. In the embodiment shown in Figs. 3 and 4 the retaining feature takes the form of a foot 8 located at the distal end of each leg 5. As may be seen, each foot 8 extends generally perpendicularly with respect to the leg 5 to which it is attached. Each foot 8 extends inwardly towards the central axis Z of the fixing 1, and in so doing presents outward 9 and opposing inward 10 facing surfaces adjacent the leg 5. In one embodiment of the invention, both the outward 9 and inward 10 facing surfaces are substantially perpendicular to the leg 5. However, in an alternative embodiment the outward 9 facing surface is tapered from a point proximal the leg 5 to a distal end 11 of the foot 8. As will be described below, this tapering reduces the force required to bring the fixing 1 into engagement with a fastener.

In an alternative embodiment (not shown), the retaining feature may be a recess shaped to cooperate with a protrusion, such as an annular ridge for example, on a fastener such as a bolt head or nut. In a further embodiment, the retaining feature could be provided as a natural element of one or more legs shaped to conform to a feature of a fastener, e.g. legs shaped to conform to and surround a ball headed fastener.

Protrusion 4 is shaped to cooperate with a recess 12 provided in a fastener, preferably in the head 2 of a fastener. In a preferred embodiment, the protrusion 4 is configured to have a length corresponding to the depth of the recess 12 provided in the fastener; such that the protrusion extends through the full depth of the recess when in cooperation with it, and cannot be dislodged easily by the application of a lateral or shear force. In a further embodiment, the protrusion 4 is shaped so as to correspond to the recess 12.

Alternatively, the protrusion and recess may be arranged in an opposite manner. That is, the protrusion may be associated with or located on the head of a fastener (i.e. it may be formed by an end of a threaded bolt protruding from a nut, or may be formed on a bolt head or the like in any known way) and the fixing may be provided with a recess or aperture to receive it. In some embodiments the recess may have a depth matching the length of the protrusion, the recess may be shaped to correspond to the protrusion, and/or the aperture may be shaped to correspond in cross-section to the protrusion.

The body 3 of the fixing 1 can take many different formats. The format depicted in the figures, especially Fig. 2, is one that is intended to minimise the amount of material that is utilised, and thus to minimize the mass and cost of the fixing. However, other configurations are equally applicable and the body 3 could be provided such that it covers fully, for example, a head 2 of a fastener. The fixing can therefore function, in certain embodiments, as a cover or cap for a fastener such as a nut or a bolt head.

As mentioned already, the fixing 1 of the invention is suitable for use with any fastener having a head 2 or analogous feature. For the purposes of clarity of explanation, the fastener will be described with reference to a bolt throughout the remainder of the description. However, it will be clear to the reader that this is in no way intended as a limitation and, as noted previously, other fasteners such as nuts or the like apply equally.

As may be seen best in Figs. 3 and 4, the bolt is provided with a recess 12 in the upper surface of its head 2 (the surface opposed to a shaft of the fastener, for example). The recess is preferably centred therein. In the figures, the recess 12 is a recess that is present to enable the bolt to be driven by a male tool driver such as a hexagonal driver. However, any configuration of recess is applicable, whether it is intended to serve a purpose other than reception of the protrusion 4 or not. In either case, the bolt head may be simply cold formed without any need for subsequent machining. The recess 12 is of a size to accommodate the protrusion 4 of the fixing 1.

The fastener is provided with a retaining feature. In the embodiment depicted in Figs. 3 and 4, the retaining feature takes the form of an annular flange 13 located around the head 2 of the bolt and spaced from the bearing surface 14 of the bolt head 2. The use of such a feature enables the fixing to engage with the fastener without interacting or interfering with the bearing surface 14 of the bolt. This is important when working with bolts or analogous fasteners that are employed in a safety critical role.

In an alternative embodiment not depicted in the figures, the retaining feature on the bolt head 2 could take the form of an annular recess or groove instead of an annular flange. This alternative embodiment will be described in greater detail below.

It will be appreciated that the sizing of the fixing 1 is dependent upon the sizing of the fastener that it is to engage. However, many fasteners are provided in standard sizes and thus the fixing 1 of the invention can be manufactured in many different sizes so as to be compatible with standard sizes of fastener. Nonetheless, the length of the legs 5 is of importance to the correct functioning of the fixing, because it is the length of the legs 5 that determines where the feet 8 on each leg 5 are presented to the fastener. As may be seen from Fig. 3, for example, the legs 5 are of a length such that they present the inward facing surface 10 of the foot 8 to abut with an underside 17 of the flange 13. Additionally, the foot 8 is sized such that it presents a significant surface in abutment with the flange. Also, the separation of the legs in their undeformed/un-deflected configuration is important such that the legs 5 are disposed to correctly present the feet 8 to achieve a secure engagement with the retaining feature 13. The specific sizes will of course vary depending upon application and the size of the fixing 1 and fastener with which it is used.

In order to attach the fixing 1 to the fastener, the fixing 1 is pressed onto the fastener in the direction and orientation shown by the arrow in Fig. 3. That is, the fixing 1 is presented to the head 2 of a fastener such as a bolt with the legs 5 and protrusion 4 facing the head 2 of the bolt and the recess 12. The fixing 1 is then urged by the user via application of force to slide over the head 2 of the bolt such that the legs 5 surround the head 2 and the protrusion 4 enters and engages the recess 12. As the protrusion 4 moves into the recess 12, the feet 8 move toward the flange 13, until the outward facing surface 9 of each foot 8 comes into contact with an upper surface 15 of the flange 13. Further pressure applied to the fixing 1 at this point in the action of engagement causes the outward facing surface 9 of each foot 8 to slide relative to upward surface 15 of the flange (such that the tip 11 of each foot moves away from side 16 of the head 2), causing the resilient legs 5 to flex outwardly; thus allowing the feet 8 to slide over the flange 13. In some embodiments this is enhanced by providing a taper on the outward facing surface 9 of the foot 8, as already described, which enhances the tendency of the foot to slide over the flange, thereby reducing the force required to achieve engagement. Additional enhancement may be provided by tapering the upper surface 15 of the flange in the opposite direction as shown in Figs. 3 and 4. In such an arrangement, the underside 17 of the flange could remain perpendicular, or substantially so, in relation to the side of the bolt head 2.

Once the feet 8 have passed the flange 13, the resilience of the legs 5 causes them to revert toward their original shape. As the legs 5 return to their un-deflected state, they produce an audible indication to the user that the fixing 1 has been correctly secured to the head 2 of the fastener. That is, the legs 5 spring or snap back toward their original straight configuration causing the feet 8 to engage with the underside of the flange 13 and, potentially, with the side 16 of the head 2 at their tips 11. This audible indication and snap-fit action during the engagement of the fixing 1 with the fastener, provides a useful time saving feature and is a reliable and efficient assembly aid, especially for mass produced vehicles.

It can be seen from the Figures that the legs 5 are spaced apart such that in their normal, un-deflected configuration they abut the outer edge of the flange 13 so as to envelope it. The inward facing surface 10 of each foot 8 thus abuts the underside 17 of the flange 13 as shown in Fig. 3. The feet 8 therefore grip the underside 17 of the flange 13 and act against any attempt to remove the fixing 1 from the bolt head 2 by applying a separating force along the longitudinal axis of the bolt. Providing an inward facing surface 10 that is generally perpendicular to a leg which abuts an underside 17 of the flange that is generally perpendicular to the side 16 of the bolt head 2 reduces any tendency for these two elements to slide over one another when exposed to a separating force along the longitudinal axis of the bolt.

It will be appreciated by one skilled in the art, that the performance characteristics such as engagement or snap-fit force and separation force may be tuned as desired by tuning of the size and shape of any engagement surfaces, and/or the strength or resilience of the legs 5.

In another embodiment (not shown), the protruding engagement surface 4 is replaced by a recess or aperture provided on the fixing. The fixing is applied to the fastener in the same way as described in detail above, but with the recess or aperture of the fixing cooperating with a corresponding protruding feature on the fastener. For example, as the fixing is pressed onto the fastener, the protruding feature on the fastener enters the recess or aperture on the fixing, aligning the fixing with the fastener. Once the fixing is aligned with the fastener and the means for resisting shear forces between the fixing and the fastener cooperate, the feet of the fixing engage with the retaining feature of the fastener, as already described. The engagement of the fastener retaining feature and the feet is again responsible for resisting axial forces seeking to separate the fixing from the fastener. The abutment between the interior of the recess or aperture of the fixing and the protrusion of the fastener serves to resist shear forces applied to the fixing, which may otherwise separate the fixing from the fastener. Therefore, there is built-in resistance to both shear and axial forces which may separate the fixing from the fastener.

In a further embodiment that is not depicted in the figures, the retaining feature present on the fastener may be an annular recess in the fastener a predefined distance from the top surface of the fastener (or a series of recesses arranged annularly around the fastener). This feature is formed by cutting or rolling at least one recess into the fastener, or by manufacturing the fastener with an oversized section toward the top of the fastener for example thus presenting a shoulder to a portion of reduced width or diameter, without affecting the bearing surface of the fastener.

In this alternative embodiment the recess is sized to be sufficiently wide and sufficiently deep to accommodate a substantial portion, and preferably the majority, of the or each foot 8. Hence, when the fixing 1 is pressed onto the fastener, the legs 5 are caused to deflect outwardly by the interaction between the feet 8 and the head 2 of the fastener in the same manner as described above in respect of the flange 13. The legs 5 thus begin to pass over the head 2. The legs 5 are of a length to allow the feet 8 to slide over the head 2 until the feet 8 reach the annular recess. Once the feet 8 reach the annular recess, the resilience of the legs 5 causes them to resume their original shape as far as possible. The feet 8 are thereby inserted into the annular recess. Hence, it may be seen that the legs 5 are spaced apart such that they abut, in their normal, un-deflected configuration, the sides 16 of the head 2. Once fitted, should a separating force be applied along the longitudinal axis of the fastener, the inward facing surfaces 10 of the feet 8 bear against the interior of the annular recess, thereby acting against separation. The protrusion 4 acts in the same manner as described above. The upper surface of the head 2 of the fastener may be tapered in an edge region in an opposite manner to the outward facing surface 9 of the feet 8 of the fixing in order to further enhance the sliding of those feet over the head 2, in a similar fashion to the taper on surface 15 of flange 13.

In an example, the legs 5 are of such a length that at the point when they snap back, the fixing 1 is located on the head 2 of the fastener. That is, an abutment region 1a (fig. 3) of the fixing 1 is in abutment with a corresponding abutment surface 2a of the head 2 of the fastener; and the protrusion 4 is located in the recess 12.

The location of the protrusion 4 within the recess 12 serves to resist any shear forces that may be applied to the fixing 1 once it is secured to the fastener, that is, any force perpendicular to the axis Z. For instance, if a sideways or shear force is applied to the fixing 1 after it has been affixed to the head 2 of the fastener, that sideways force is resisted by the protrusion 4 abutting the wall(s) of the recess 12. Hence, the shear force will not cause the fixing 1 to slide sideways off of the head 2 of the fastener. The provision of this feature is a distinct advantage, permitting legs 5 to be optimised for managing forces in a single axis Z, and allowing the minimum number of legs 5 to be utilised.

Whilst shear forces applied to the fixing 1 are managed by the combination of the protrusion 4 and recess or aperture 12, resistance to axial forces applied to the fixing 1 along the longitudinal axis Z of the fastener/fixing so as to remove the fixing from the fastener is provided by the action of the retaining feet 8 and legs 5 on the underside 17 of the flange 13 or on the upper wall of the annular recess (not shown in the Figures).

In an alternative embodiment 101 shown in Fig. 1(b), the three narrow legs of the first embodiment are replaced with a single curved-section leg 19, which takes the form of a skirt with a single split. This embodiment further comprises a body portion 3 and a protrusion 4. The leg 19 has an inwardly protruding foot 8 having an outward facing surface 9 which may be tapered from a point proximal the leg 19 to a distal end 11 of the foot 8 similarly to the first embodiment. The foot may engage with a flange or with a recess on the fastener head. The leg 19 is resilient and acts in the same way as the independent legs 5 of the first embodiment, but will clearly result in a greater contact area between the foot 8 of the fixing 101 and the retaining feature of the fastener, thereby resulting in a more secure fixing.

The resilience of the leg 19 may be provided, for example, through selection of a suitably resilient material and/or through consideration of the dimensions of the leg. Alternatively or additionally, a notch similar to that of the first embodiment can be provided at the point of connection between the leg 19 and the body 3, thereby providing or enhancing resilience.

As will be appreciated, the force required to attach the fixing 1 of the present invention to a fastener such as a nut or the head 2 of a bolt in the manner described above, and the force required to release it, may be managed using a number of factors. Firstly, the area of the bearing surfaces between the feet 8 and the flange 13 or recess will affect the force required to attach and release the fixing; the greater the surface area, the more difficult it will be to attach and remove the fixing 1. This can be controlled by adjusting parameters of the connecting surfaces. Similarly, control can be achieved through suitable angling of the surfaces to promote their sliding relative to one another, and conversely to counteract it, as described above in relation to Figs. 2 and 3.

The number of legs 5 utilised will also have an effect. Fig. 1 (a) depicts a clip with three legs; but a greater number of legs of similar dimensions would result in a more secure fixing between the clip and the fastener, at the cost of greater manufacturing expense and/or tool complexity. Similarly, increasing the width of the legs and/or feet, which would allow a reduction in the number of legs, would also have the effect of generating a more secure fixing. This may be an acceptable trade-off in many situations. Finally, the material properties of the fixing 1, in particular the material and dimensions of the legs 5, will affect the force required to engage or remove the fixing, and the dimensions of the bolt head retaining feature will also affect the forces required. Hence, the design of the fixings may be tuned to provide the desired attachment and release force criteria.

Fig 1(c) shows a further alternative embodiment 201 of the fixing of the present invention, comprising a body portion 3, a leg 22 (which takes the form of a skirt) having an annular recess 21 spaced apart from the body 3 and facing inwardly, and a resilient split ring 20.

In this embodiment, fixing 201 of the present invention is designed for application to a fastener such as a nut or bolt head, etc., having a retaining feature in the form of an annular recess around the perimeter of the fastener. The fixing has a body 3 with a first member 4 provided substantially centrally in the body 3. The first member is arranged to cooperate with a corresponding feature provided in the fastener to resist shear forces applied to the fixing 201 relative to the fastener as described above. The first member 4 may take the form of a protruding surface depending from the centre of the body 3, arranged to cooperate with a corresponding recess or aperture in the fastener. Alternatively, the first member 4 may take the form of a recess or aperture arranged for cooperation with a correspondingly shaped protrusion, extending from the fastener and extending towards the fixing 201.

In addition to the first member 4 arranged to resist shear forces, the fixing 201 is further provided with a second member arranged to resist axial forces. In this embodiment, the second member, arranged to resist axial forces is provided by a resilient split ring or snap ring 20 held within an annular recess 21 formed around an inner surface of the skirt or leg 22. The recess 21 in the leg 22 is sufficiently deep and wide to accommodate a proportion of the split ring 20. The recess may be provided with a peg-like feature (not shown), arranged to prevent the split ring 20 rotating around in the recess 21 in use. The benefit provided by the peg-like feature is explained below.

In use, the user presses the fixing 201 over the head of the fastener which causes the split ring 20 to expand temporarily until the split ring 20 engages with a corresponding annular recess formed around the exterior surface of the fastener. The annular recess in the bolt head is also sized to accommodate at least a portion of the split-ring 20. The resilient split ring 20 returns to its undeformed state as soon as it is seated into the corresponding annular recess formed in the fastener, providing a snap-fit of the fixing to the fastener and producing an audible indication to the user that the fixing has been fitted correctly.

In the particular embodiment shown in Fig. 1 (c), the depth and width of the recess 21 of the fixing 201 and those of the annular recess of the head of the fastener may be approximately equal. Furthermore, the depth and width of the recess 21 of the fixing 201 and of the annular recess in the head of the fastener, and the dimensions of the split ring 20, are arranged so that the split ring 20 may be inserted into, and thus engage with, the annular recesses of both the bolt head and the fixing 201, thereby resulting in a secure fixing between the two.

In this embodiment, when the fixing 201 is located on the fastener, the recess 21 of the skirt or leg 22 and the annular recess of the fastener lie adjacent to one another. This is achieved through manufacture of the fixing and fastener with suitable dimensions. In attaching the fixing to the fastener, the split ring 20 engages with the annular recess of the fastener. The split ring 20 is pressed onto the head of the fastener so that it lies in the gap provided by the recess 21 and the annular recess in the fastener. The ends of the split ring 20 deflect during application, allowing the ring to pass over the fastener. Once the split ring 20 has passed over the head of the fastener and into the recess, the resilience of the split ring 20 causes the ends to spring back to their original position so that it lies in the annular recess provided in the fastener head and is therefore attached securely thereto.

In an example of the fixing 201, the leg 22 is resilient and is caused to deflect outwardly during fitment to a fastener. The resilience of the leg 22 permits the split ring 20 additional clearance to accommodate fasteners of a larger head size. It is envisaged that resilience of the leg is provided in any of the ways discussed above in respect of previous embodiments.

In this embodiment 201, the action of the split ring 20 on the walls of the recess 21 and the annular recess in the head of the fastener resists axial forces trying to remove the fixing 201 from the fastener. The skirt or leg 22 envelopes the sidewalls of the head of the fastener, further resisting shear forces on the fixing 201, and increasing robustness of the fixing in use. In one example, the fixing interior is dimensioned to conform to the head of the fastener. Therefore, the fixing 201 of this embodiment of the present invention resists shear and axial forces trying to remove it from a fastener as described herein.

Where removal of the fixing 201 from the fastener is desired, an aperture (not shown) is provided in the body 3 or the leg 22 of the fixing, to allow the user to insert a tool to open up the split ring 20. The provision of the peg-like feature ensures that the split of the split ring 20 is held adjacent to the aperture so that, upon insertion of a tool, the user may apply the necessary force to the split ring 20 to effect separation of the fixing 201 from the fastener.

In an alternative embodiment, the leg 22 need not be resilient, or as resilient, and the split ring 20 may be located in the recess 21 prior to attachment of the fixing to the fastener. The tool mentioned above may then be inserted into the aperture and used to expand the split in the split ring 20 thus allowing it to pass over the fastener. Removal of the tool will allow the split ring to snap back into engagement with the recess in the bolt head. Removal of the fixing can be effected as discussed above.

It should be noted that any of the variations of the embodiment of figure 1(c) can be tuned as discussed for previous embodiments. For example, the cross-sectional profile of the split ring 20 may include taper to tune required attachment and detachment forces, as well as resilience being provided, etc. The fixing 1 described above according to any of the embodiments of the invention is of particular advantage because it can be fitted to a fastener that is already present in an apparatus or other arrangement and thus may be retrofitted. For example, the fixing 1 of the present invention can be applied to the head 2 of a fastener that is employed already in a construction. Further, because the fixing 1 does not interfere or interact with the bearing surface of the fastener to which it is applied, it can be used with safety critical fasteners. Accordingly, the fixing of the present invention can be used to attach an article to a fastener that already exists. For example, it can be employed to attach components such as trim panels, heat shields, splash guards, ducting panels and aerodynamic control surfaces to existing fasteners in a motor vehicle.

As will be appreciated, the fixing 1 of the present invention may be attached to such components in many ways. It can be inserted into apertures provided in the components configured for their receipt and maintained therein using an arrangement of cooperating and engaging surfaces, adhesive or any other suitable means. Alternatively such fixings can be formed integrally with the components to be affixed to fasteners such as bolt heads 2.

In an alternative example (not shown) of the fixing of the present invention, the body of the fixing is provided with a threaded aperture. The threaded aperture is configured for use with a threaded tool to remove the fixing from the fastener, so as to provide access to the fastener for servicing. In this example, the threaded aperture is formed through the first member provided in the body of the fixing.

In use, a threaded tool such as a bolt is inserted into the threaded aperture and wound into the threaded aperture until the end of the threaded tool impinges upon the head of the fastener covered by the fixing. To remove the fixing from the fastener, the user tightens the threaded tool until the force of the tool against the head of the fastener exceeds the retaining force provided by the means for resisting axial force. The action of the tool against the head of the fastener causes the retaining means such as the feet 8 or split ring 20, of the examples described above, to disengage, releasing the fastener and allowing removal of the fixing.

After removal of the fixing from the fastener, the user removes the tool from the fixing to allow the fixing to be used again as required. The threaded tool may be provided by a separate part such as a bolt, or may be a captive feature provided in the body of the fixing.

It will be appreciated that the present invention has been described above by way of example only and that alterations and modifications may be made without departing from the scope of the invention as defined in the claims.

## Claims

1. A fixing (1) for application to a fastener, the fixing (1) comprising:
a body (3);
a first member (4) providing means for resisting shear forces applied to the fixing (1); and
a second member (5) providing means for resisting axial forces applied to separate the fixing (1) from a fastener.

2. The fixing (1) of claim 1, wherein the means (4) for resisting shear forces is arranged to align the fixing (1) with the fastener and is a protrusion (4) extending from the body (3), wherein the protrusion is shaped to cooperate with a recess (12) provided in a fastener when the fixing (1) is brought into engagement with the fastener.

3. The fixing (1) of claim 1, wherein the means (4) for resisting shear forces is arranged to align the fixing (1) with the fastener and is a recess (12) or aperture in the body (3), wherein the recess (12) or aperture is shaped to cooperate with a protrusion (4) on, or associated with, a fastener when the fixing (1) is brought into engagement with the fastener.

4. The fixing (1, 101) of any preceding claim, wherein the means for resisting axial forces comprises at least one resilient leg (5, 19) extending from an edge region (7) of the body (3).

5. The fixing (1) of claim 4, comprising a plurality of legs (5), and wherein the legs are spaced substantially evenly around the body (3).

6. The fixing (1) of claim 4 or claim 5, wherein a retaining feature (8) is provided on each leg (5) comprising an inwardly protruding foot (8) at the end of each leg (5) that is distal to the body (3), wherein the retaining feature (8) is configured to engage with a retaining feature (13) provided on a fastener when the fixing (1) is brought into engagement with the fastener.

7. The fixing (1) of claim 6, wherein each foot (8) protrudes substantially perpendicularly to the leg (5), and defines inward (10) and outward (9) facing surfaces adjacent to the leg.

8. The fixing (201) according to any one of claims 1 to 3, wherein the means for resisting axial forces comprises a skirt (22) extending from the body (3).

9. The fixing (201) according to claim 8, wherein a retaining feature is provided by a resilient split ring or snap ring (20) at least partly surrounded by an inward facing annular recess (21) formed in an internal face of the skirt (22).

10. The fixing (1, 101) of any one of claims 4 to 7, in combination with a fastener having a head (2), wherein the head of the fastener has a retaining feature for engaging the fixing (1), wherein the retaining feature comprises a recess configured to engage with the or each inwardly protruding foot (8) extending from the or each leg (5, 19).

11. The fixing (1, 101) of any one of claims 4 to 7, in combination with a fastener having a head (2), wherein the head of the fastener has a retaining feature (13) for engaging the fixing (1), wherein the retaining feature comprises a protrusion (13) configured to engage with the or each inwardly protruding foot (8) extending from the or each leg (5, 19).

12. The fixing (201) of claim 9, in combination with a fastener having a head (2), wherein the head of the fastener has a retaining feature for engaging with the fixing (201), wherein the retaining feature comprises a recess configured to engage with the retaining feature (20) of the fixing (201).

13. The combination of a fixing (1) and a fastener of any one of claims 10 to 12, wherein the fastener has a head (2) and a shaft, and
wherein the means (4) provided in the fixing (1) for resisting shear forces cooperates with a first surface (2a) of the head (2) of the fastener, the first surface (2a) opposing the shaft and,
wherein the at least one retaining feature (12) is provided on a surface or surfaces adjacent the first surface (2a).

14. The combination of a fixing (1) and a fastener of claim 11, wherein the at least one retaining feature is a tapered flange (13) over which the retaining feature (8) of the fixing (1) is caused to slide during engagement of the fixing and fastener and with which the retaining feature (8) engages to prevent removal of the fixing (1) from said fastener

15. A method for securing a part to a vehicle body, the method comprising the steps:
securing a fastener to a vehicle body;
positioning the part adjacent to the fastener;
locating a fixing (1) according to any one of claims 2 to 9 in or through the part onto an exposed head (2) of the fastener;
aligning a cooperating feature (4) of the fixing (1) with a corresponding feature (12) on the head (2) of the fastener; and
forcing the fixing (1) and associated part against the head (2) of the fastener so as to bring a retaining feature (4) of the fixing (1) into engagement with a corresponding retaining feature (12) provided on the head (2) of the fastener.
